# EUROPEAN PATENT APPLICATION

(11) **EP 4 712 176 A1**
(43) Date of publication of application: **18.03.2026**
(21) Application number: 25199395.2
(22) Date of filing: 01.09.2025
(51) Int. Cl.: H01M 8/04007, H01M 8/04111, H01M 8/0662

(54) **SOLID OXIDE OXIDATION UNIT AND PRESSURE-RESISTANT FUEL CELL**

(30) Priority: 11.09.2024 DE 102024126154
(71) Applicant: AIRBUS Operations GmbH, 21129 Hamburg (DE)
(72) Inventor: NEHTER, Pedro, 21129 Hamburg (DE)
(74) Representative: LKGLOBAL Partnerschaftsgesellschaft mbB

(57) **Abstract**

The present invention relates to a oxide oxidation unit (600) for converting at least one reductant to thermal energy under the production of exhausts (G) and further exhausts (H) from a first supply flow (24) comprising an oxidant and a second supply flow (26) comprising the reductant, respectively; the solid oxide oxidation unit (600) comprising a duct wall (14) configured for separating the first supply flow (24) from the second supply flow and at least sectionwise comprising an electrolyte layer allowing for a transfer of ions of the oxidant to the reductant; wherein the duct wall (14) comprises an electrically conducting material (113) allowing for a transfer of electrons from the reductant to the oxidant for enabling a full oxidation of the reductant contained in the second supply flow (26). Furthermore, the present invention relates to a fuel cell arrangement (200) comprising at least one solid oxide oxidation unit (600) and at least one fuel cell setup (100) comprising a carrier structure (10) comprising a duct wall; wherein a primary power coating layer (28) is applied on a surface of the duct wall for being arranged between the first supply flow and the second supply flow; and wherein the primary power coating layer (28) is configured for generating electrical energy from the first supply flow and the second supply flow; to an energy supply system (300), comprising at least one solid oxide oxidation unit (600) and/or at least one fuel cell arrangement (200), and to an apparatus, in particular a vehicle, such as an aircraft (400), comprising same.

## Description

### FIELD OF THE INVENTION

The present invention relates to a solid oxide oxidation unit for converting at least one reductant to thermal energy under the production of exhausts and further exhausts from a first supply flow comprising an oxidant and a second supply flow comprising the reductant, respectively, to a fuel cell arrangement, to a pressure stable electrode, more specifically the invention relates to a carrier structure for electrodes of a fuel cell, a fuel cell setup, a fuel cell arrangement, an energy supply system, an aircraft and a method for providing a carrier structure.

### BACKGROUND OF THE INVENTION

Fuel cells that convert chemical to electrical energy may be deployed to power a wide range of vehicle systems. However, certain vehicle systems, like aircrafts, have challenges in deploying fuel cells in terms of their stability to withstand possible physical conditions that may occur during operation of an aircraft and in terms of leakage of the fuel cell. The fuel cell design for handling of these requirements may result in too heavy fuel cell arrangements that may render the use of fuel cells in aircrafts inefficient. Furthermore, solid oxide fuel cells according to the prior art, usually a certain amount of fuel remains unused, i.e., not converted to electrical energy.

### SUMMARY OF THE INVENTION

There may thus be a need for a more stable fuel cell suitable for aircrafts, in particular, in that it is capable to intrinsically deal with high pressure differences of the gas channels. Furthermore, it may be seen as an object to enhance fuel conversion rates by a catalytic and reactant-separating oxidation device and thus efficiency of fuel cell arrangements and/or energy supply systems, in particular for aircrafts.

The object of the present invention is solved by the subject-matter of the independent claims; further embodiments are incorporated in the dependent claims. It should be noted that the following described aspects of the invention apply also for the solid oxide oxidation unit, the carrier structure for electrodes of the fuel cell, for the fuel cell setup, for the fuel cell arrangement, for the energy supply system, for the aircraft and for the method for providing a carrier structure.

According to an aspect of the present invention, a solid oxide oxidation unit for converting at least one reductant to thermal energy under the production of exhausts and further exhausts from a first supply flow comprising an oxidant and a second supply flow comprising the reductant, respectively, is provided; the solid oxide oxidation unit comprising a duct wall configured for separating the first supply flow from the second supply flow and at least sectionwise comprising an electrolyte layer allowing for a transfer of ions of the oxidant to the reductant; wherein the duct wall comprises an electrically conducting material allowing for a transfer of electrons from the reductant to the oxidant for enabling a full oxidation of the reductant contained in the second supply flow.

According to an aspect, a fuel cell arrangement comprising at least one corresponding solid oxide oxidation unit and at least one fuel cell setup is provided, the fuel cell setup comprising a carrier structure comprising a duct wall; wherein a primary power coating layer is applied on a surface of the duct wall for being arranged between the first supply flow and the second supply flow; and wherein the primary power coating layer is configured for generating electrical energy from the first supply flow and the second supply flow.

According to an aspect, an energy supply system comprising at least one corresponding solid oxide oxidation unit and/or at least one corresponding fuel cell arrangement is provided.

According to an aspect, an apparatus, in particular a vehicle, such as an aircraft, is provided, comprising at least one corresponding solid oxide oxidation unit, a corresponding fuel cell arrangement, and/or a corresponding energy system. As an alternative example, the apparatus may be provided as a stationary device which can be configured for CO₂ supply for synthetic fuel production, or alike.

The electrically conductive material allows for operating the solid oxide oxidation unit as a sort of short-circuit fuel cell. The solid oxide oxidation unit may thus be understood as an expansion cell having to partial pressures of the oxidant, such as oxygen contained in supply air. The present solution thus allows for a complete, or at least essentially complete conversion of the reductant to provide the exhausts and/or the further exhausts at a respective enthalpy level which can be used for driving and/or supporting heat engine conversion processes including the generation electrical and special mechanical energy.

The present solution thus has the advantage over the prior art that it provides lighter and more safety failure tolerant fuel cell arrangements suitable for aircrafts as well as having enhanced overall efficiency of the energy supply systems, e.g., by allowing to keep the reductant and oxidant exhaust gas streams separated from each other.. Furthermore, the present invention allows for the elimination of particles and NO_{X} emissions when using hydrogen and in particular hydrocarbon fuels like sustainable aviation fuels (SAF), for example for driving turbofan engines. The present solution enables the use of most efficient adiabatic steam reforming of hydrocarbons. Overall, the present solution enables helps to provide means for an environmentally friendly and more efficient fuel conversion for generating electrical, mechanical and/or thermal energy.

According to an embodiment of a solid oxide oxidation unit, the duct wall and/or the electrolyte layer comprise and/or comprises, respectively, a ceramic oxide. Using ceramic oxide as a component, possibly a main component of the duct wall and state of the electrolyte layer, enables to provide the solid oxide oxidation unit with a high degree of stability withstanding high temperatures, as well as a certain amount of static and/or dynamic mechanical stresses. Furthermore, the ceramic oxide can provide a high chemical stability. The ceramic oxide thus helps to further improve the overall stability of the solid oxide oxidation unit.

According to an embodiment of a solid oxide oxidation unit, the electrolyte layer is at least partly doped with the electrically conducting material. By doping the electrolyte layer with the electrically conducting material, the duct wall itself may become electrically conducting. This provides a way for operating the solid oxide oxidation unit as a sort of short-circuit fuel cell that is withstanding high temperatures, as well as a certain amount of static and/or dynamic mechanical stresses, while maintaining high chemical stability. Doping the electrolyte layer with the electrically conducting material thus further helps to further improve the overall stability of the solid oxide oxidation unit.

According to an embodiment of a solid oxide oxidation unit, a cathode layer is attached to the electrolyte layer and the electrolyte layer is attached to an anode layer in a sandwich structure. The cathode layer is configured to face the first supply flow. The anode layer is configured to face the second supply flow. Providing the cathode layer, the electrolyte layer and the anode layer in a sandwich structure further helps in increasing stability of the solid oxide oxidation unit in a way that it withstands high temperatures, as well as a certain amount of static and/or dynamic mechanical stresses.

According to an embodiment of a solid oxide oxidation unit, the solid oxide oxidation unit is configured to be operated at elevated temperatures over 600°C, preferably over 800°C, most preferably around or over 1000°C. Operating the solid oxide oxidation unit at such elevated temperature levels enables to efficiently use the exhausts and/or further exhausts for driving and/or supporting energy conversion processes including the generation electrical and special mechanical energy. This helps to further enhance thus efficiency of fuel cell arrangements and/or energy supply systems, in particular for aircrafts.

According to an embodiment of a fuel cell arrangement, the solid oxide oxidation unit is arranged upstream of the first supply flow and/or downstream of the second supply flow with respect to the fuel cell setup for enabling a full oxidation of the reductant contained in the second supply flow. Thereby, the first supply flow may be preheated, for example, in a counter flow arrangement before entering the fuel cell setup, which helps to reduce the size of any heat exchange units which may be provided for preheating the first supply flow. Furthermore, the reductant contained in the second supply flow may be fully oxidized to increase a thermal energy output of the energy supply system. Consequently, the amount of excess oxidant, required for cooling, can be reduced and overall efficiency of the energy supply system may be further increased.

According to an embodiment of an energy supply system, the energy supply system further comprises at least one gas turbine arrangement configured for generating mechanical and/or electrical energy by expanding the exhausts and/or comprising at least one steam turbine arrangement for generating mechanical and/or electrical energy by expanding the further exhausts. The at least one gas turbine arrangement can be operated according to the principles of a Brayton cycle. The at least one steam turbine arrangement can be operated according to the principles of a Rankine cycle. The exhausts and the further exhausts from the energy supply system, in particular from the at least one solid oxide oxidation unit can thus be used to generate mechanical and/or electrical energy in a much more efficient manner compared to a state-of-the-art combustion chamber-Bryton cycle arrangement.

According to an embodiment of an energy supply system, the at least one gas turbine arrangement and the at least one steam turbine arrangement are configured to be operated in parallel. Therefore, a separation of the exhausts from the further exhausts can be maintained. The exhausts and the further exhausts can be used at their respective pressure levels for driving the at least one gas turbine arrangement and/or the at least one steam turbine arrangement, respectively. This helps in further improving efficiency of the energy supply system. Respective calculations indicated that in comparison to gas turbine processes as known from the prior art, the parallel provision of the at least one gas turbine arrangement and the at least one steam turbine arrangement can lead to inefficiency increase of 8% or higher. Furthermore, said parallel configuration of the at least one gas turbine arrangement and the at least one steam turbine arrangement allows for having standard atmospheric pressure conditions at the side of the first supply flow, whereas the second supply flow may be provided as or contain superheated steam which can be expanded in the at least one steam turbine arrangement. This can lead to efficiency benefits of 19% or higher as compared to solid oxide fuel cell cycles operated at atmospheric pressure conditions without any further thermodynamic exploitation of the exhausts and/or the further exhausts from the solid oxide fuel cell cycles.

According to an embodiment of an energy supply system, the energy supply system is configured to at least partly feed the further exhausts back to the at least one solid oxide oxidation unit, and/or the fuel cell arrangement. Thereby, on the one hand, operating conditions of the fuel cell arrangement can be improved. On the other hand, additional water can be accumulated to improve operating conditions of the at least one steam turbine arrangement. This helps in further improving efficiency of the energy supply system.

According to an embodiment of an energy supply system, the energy supply system further comprises at least one heat exchange unit configured to condensate water contained in the further exhausts and/or to recover heat from the exhausts leaving the at least one gas turbine arrangement. Providing the water in condensed, thus liquid form, enables to imply a pump unit for efficiently pressurizing the water fed back to the at least one solid oxide oxidation unit, and/or the fuel cell arrangement.

According to an embodiment of an energy supply system, the energy supply system further comprises at least one heat exchange unit configured to collect heat from at least one solid oxide oxidation unit, the at least one fuel cell arrangement and/or from compressed supply air provided to the at least one solid oxide oxidation unit and/or the fuel cell arrangement. The collected heat can be used for improving the operation of the at least one solid oxide oxidation unit, and/or the fuel cell arrangement. Thereby, overall efficiency of the energy supply system may be further improved.

According to an embodiment of an energy supply system, the energy supply system further comprises at least one reformer unit configured to reform at least one hydrocarbon fuel to at least partly provide the reductant. For example, the at least one reformer unit may be provided in the form of an adiabatic steam reformer. The at least one reformer unit enables to at least partly provide the reductant and can use recycled further exhausts to reduce emissions of combustion while elevating inlet temperatures for the at least one gas turbine arrangement and/or the at least one steam turbine arrangement to temperatures above 1000°C, preferably above 1200°C, most preferably above 1300°C. This helps to further improve efficiency of the energy supply system. Furthermore, such a pre-reforming cycle may enable to provide almost and almost pure CO₂ stream enabling to conduct an efficient CO₂ capture.

Furthermore, according to a possible alternative and/or additional aspect of the present invention, a carrier structure for electrodes of a fuel cell is provided. The structure comprising a duct wall and a tubular ducting volume. The duct wall forms the tubular ducting volume and comprises an outer surface facing a surrounding and an inner surface facing the tubular ducting volume. The tubular ducting volume is configured to conduct a first supply flow comprising an oxidant. The duct wall is configured to provide a second supply flow within the duct wall, the second supply flow comprising a reductant. The duct wall separates the first supply flow in the tubular ducting volume from the second supply flow within the duct wall and the surrounding of the carrier structure. A primary power coating layer is applied on the inner surface of the duct wall for being arranged between the first supply flow and the second supply flow. The primary power coating layer is configured for generating electrical energy from the first supply flow and the second supply flow. The duct wall is configured to withstand pressure loads resulting from a pressure difference between the tubular ducting volume and the surrounding. The pressure in the tubular ducting volume is at least twice as large as the pressure in the surrounding.

As an advantage, a lighter and more stable fuel cell is yielded.

As an advantage, high pressure differences can be handled between the inner and outer gas compartment of the tube.

As an advantage, a tremendous weight reduction for the surrounding compartment of the fuel cell stack is achieved because the pressure difference between the reactant air and the environmental atmosphere of the aircraft is fully captured by the cells itself.

As a further advantage, a fuel cell with a higher gravimetric power density is provided.

According to an example, the duct wall is based on an open-cellular structure. The open-cellular structure is configured to enhance interconnection within the duct wall to provide for its mechanical stability. The outer surface and the inner surface of the duct wall are formed from more dense cell regions of the open-cellular structure that are configured to separate the second supply flow from the first supply flow and the surrounding. The open-cellular structure comprises less dense cell regions within the duct wall to conduct the second supply flow.

According to an example, the open-cellular structure comprises a metal foam.

According to an example, a secondary power coating layer is applied on the outer surface of the duct wall for being arranged between the second supply flow and the surrounding providing an auxiliary source of oxidant to react with the reductant of the second supply flow. The secondary power coating layer is configured for providing electrical energy from the second supply flow and the auxiliary source of oxidant.

According to the present invention, also a fuel cell setup is provided. The fuel cell setup comprises at least one carrier structure according to one of the previous examples and electric terminals. The electric terminals comprise inner electric terminals that are in electric contact with the primary power coating layer. The electric terminals are configured to establish an electric power circuit by operating the carrier structure with an oxidant flow and a reductant flow.

According to the present invention, also a fuel cell arrangement is provided. The fuel cell arrangement comprises a housing and at least one fuel cell setup according to the previous examples. The least one fuel cell setup is encased by the housing. A gap between the at least one fuel cell setup and the housing forms a fluid receiving compartment for a fluid. The fluid prevents a contact of the at least one fuel cell setup with a surrounding atmosphere of the housing.

As an advantage, a more efficient thermal insulation for a fuel cell setup is provided.

As an advantage, a more secure and lighter fuel cell arrangement is yielded.

According to the present invention, also an energy supply system is provided. The energy supply system comprises at least one fuel cell arrangement according to the previous examples and a fuel reservoir. The fuel reservoir is connected to the at least one fuel cell arrangement to supply the second supply flow and the at least one fuel cell arrangement is configured to provide electric energy to power consuming loads.

As an advantage, a more secure and reliable energy supply system is yielded.

According to the present invention, also an aircraft is provided. The aircraft comprises at least one energy supply system according to the previous example and at least one power consuming load. The least one power consuming load comprises at least one of the group of: a propulsion system, electric avionic equipment and onboard electric devices for a cabin area. The least one power consuming load is powered by the at least one energy supply system.

As an advantage, a more secure and reliable aircraft is yielded.

As an advantage, leakages of fuel into the surrounding atmosphere of the fuel cell can be more effectively detected.

As an advantage, a lighter aircraft is yielded.

According to the present invention, also a method is provided. The method comprises the following steps:
- Providing a duct wall,
- Providing a tubular ducting volume, and
- Forming the tubular ducting volume from the duct wall, wherein the duct wall comprises an outer surface facing a surrounding and an inner surface facing the tubular ducting volume,
- Configuring the tubular ducting volume to conduct a first supply flow comprising an oxidant,
- Configuring the duct wall to provide a second supply flow within the duct wall, the second supply flow comprising a reductant,
   wherein the duct wall separates the first supply flow in the tubular ducting volume from the second supply flow within the duct wall and the surrounding of the carrier structure, and
- Applying a primary power coating layer on the inner surface of the duct wall for being arranged between the first supply flow and the second supply flow. The primary power coating layer is configured for generating electrical energy from the first supply flow and the second supply flow. The duct wall is configured to withstand pressure loads resulting from a pressure difference between the tubular ducting volume and the surrounding. The pressure in the tubular ducting volume is at least twice as large as the pressure in the surrounding.

According to an aspect, the fuel cell comprises a metal supported tubular cell with a metal foam as mechanical backbone, or support, which is also functioning as a fuel gas channel. The mechanical backbone allows high pressure differences between the inside and outside of the tube as well as a higher shock resistivity.

According to an aspect, a fuel cell deploys an electrode wall that protects an inner oxidant fluid stream and an inner reductant fluid stream from surroundings of the fuel cell. The wall is tube-shaped and provides the fuel fluid supply within the wall structure itself. Further the electrode wall provides a separation of the oxidant fluid stream and the reductant fluid stream. The electrode wall also enhances the mechanical stability of the fuel cell to withstand a higher mass flow of a pressurized oxidant fluid stream and a pressurized reductant fluid stream.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of an example of a carrier structure.
Fig. 2 schematically shows a general scheme of an example of a fuel cell setup and a fuel cell arrangement.
Fig. 3 schematically shows a general scheme of an example of an energy supply system.
Fig. 4 schematically shows an example of an aircraft comprising at least one energy supply system.
Fig. 5 shows basic steps of an example of a method for providing a carrier structure for electrodes of a fuel cell.
Fig. 6 schematically shows a general scheme of an exemplary solid oxide fuel cell setup.
Fig. 7 schematically shows a general scheme of an exemplary solid oxide oxidation unit.
Fig. 8 schematically shows a general scheme of an exemplary fuel cell arrangement comprising a solid oxide fuel cell setup and a solid oxide oxidation unit.
Fig. 9 schematically shows a general scheme of an exemplary energy supply system comprising a solid oxide oxidation unit and/or fuel cell arrangement used in conjunction with a steam turbine arrangement.
Fig. 10 schematically shows a general scheme of an exemplary energy supply system comprising a solid oxide oxidation unit and/or fuel cell arrangement used in conjunction with a gas turbine arrangement.
Fig. 11 schematically shows a general scheme of an exemplary energy supply system comprising a solid oxide oxidation unit and/or fuel cell arrangement used in conjunction with a combined cycle arrangement.
Fig. 12 schematically shows a general scheme of an exemplary energy supply system comprising a solid oxide oxidation unit and/or fuel cell arrangement used in conjunction with another combined cycle arrangement.
Fig. 13 schematically shows a general scheme of an exemplary energy supply system comprising a fuel cell arrangement and a solid oxide oxidation unit used in conjunction with a gas turbine arrangement.
Fig. 14 schematically shows a general scheme of an energy supply system comprising a solid oxide oxidation unit used in conjunction with a gas turbine arrangement and a steam turbine arrangement operated in parallel to each other.
Fig. 15 shows an exemplary T-S diagram based on the calculated expansion (139 kJ) of exhausts and further exhausts in the energy supply system shown in Fig. 10 and the expansion of the oxidant exhaust (125 kJ) shown in Fig. 14 operated at 10 km altitude.
Fig. 16 shows another exemplary T-S diagram based on the calculated the expansion of the water vapor fraction (14.6 kJ) within the exhaust of the gas turbine arrangement shown in Fig. 10 which can be added to the expansion of the reductant exhaust (26.2 kJ) shown in Fig. 14 operated at10 km altitude.
Fig. 17 schematically shows a general scheme of an exemplary energy supply system comprising a fuel cell arrangement used in conjunction with a solid oxide oxidation unit, a gas turbine arrangement and a steam turbine arrangement operated in parallel to each other.
Fig. 18 schematically shows a general scheme of another exemplary energy supply system comprising a fuel cell arrangement used in conjunction with a steam turbine arrangement at slightly elevated pressure levels on the oxidant side of the fuel cell.
Fig. 19 schematically shows a general scheme of another exemplary energy supply system comprising a reformer unit for reforming hydrocarbon-based fuels and a fuel cell arrangement as well as a solid oxide oxidation unit used in conjunction with a gas turbine arrangement.
Fig. 20 schematically shows a general scheme of an exemplary energy supply system comprising a reformer unit for reforming hydrocarbon-based fuels and a fuel cell arrangement as well as a solid oxide oxidation unit used in conjunction with a gas turbine arrangement and a steam turbine arrangement operated in parallel to each other.
Fig. 21 schematically shows a general scheme of another exemplary energy supply system comprising a reformer unit for hydrocarbon-based fuels and a fuel cell arrangement used in conjunction with a solid oxide oxidation unit, a gas turbine arrangement and a steam turbine arrangement operated in parallel to each other.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

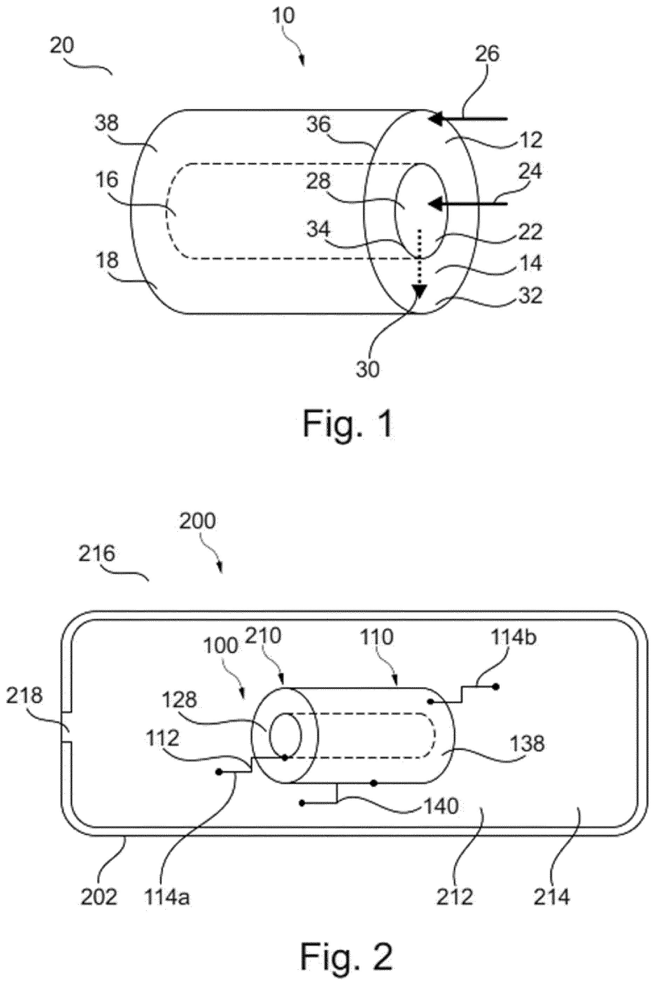

Fig. 1 schematically shows a general scheme of an example of a carrier structure. The carrier structure 10 for electrodes 12 of a fuel cell comprises a duct wall 14 and a tubular ducting volume 16. The duct wall 14 forms the tubular ducting volume 16 and comprises an outer surface 18 facing a surrounding 20 and an inner surface 22 facing the tubular ducting volume 16. The tubular ducting volume 16 is configured to conduct a first supply flow 24 comprising an oxidant. The duct wall 14 is configured to provide a second supply flow 26 within the duct wall 14, the second supply flow 26 comprising a reductant. The duct wall 14 separates the first supply flow 24 in the tubular ducting volume 16 from the second supply flow 26 within the duct wall 14 and the surrounding 20 of the carrier structure 10. A primary power coating layer 28 is applied on the inner surface 22 of the duct wall 14 for being arranged between the first supply flow 24 and the second supply flow 26. The primary power coating layer 28 is configured for generating electrical energy from the first supply flow 24 and the second supply flow 26. The duct wall 14 is configured to withstand pressure loads 30 resulting from a pressure difference between the tubular ducting volume 16 and the surrounding 20. The pressure in the tubular ducting volume 16 is at least twice as large as the pressure in the surrounding 20.

The carrier structure can also be referred to as support, hull, skeleton, backbone, framework, base, tubular framework, scaffold, matrix, column, spine, base, supporting device, supporting framework, support body, supporting membrane, membrane body, membrane device, framework device, membrane support, base framework, base membrane, base support, base cylinder, base reactor, base structure, base unit.

The term "primary" can also be referred to as first and vice versa.

The term "secondary" can also be referred to as second and vice versa.

In an example, the carrier structure 10 comprises metal, not shown in Fig. 1.

In an example, the carrier structure 10 is made by additive manufacturing, not shown in Fig. 1.

In an example, the carrier structure 10 is made by additive manufacturing from metal powder.

The term "electrodes" relates to units that can extract electrons from atoms, donate electrons to atoms or transfer electrons between atoms.

The term "fuel cell" relates to a unit that converts chemical energy into electric energy using a reducing and oxidizing substance.

In an example, the fuel cell is provided as solid oxide fuel cell, SOFC. The solid oxide fuel cell provides an oxide ion conducting solid state electrolyte between an anode layer site and a cathode layer site. The anode layer site extracts electrons from a reducing substance, i.e., hydrogen, that are transferred via an electric circuit to the cathode layer site. At the cathode layer site these electrons reduce an oxidant, i.e., oxygen, to oxide ions. The oxide ions are transferred via the oxide ion conducting solid state electrolyte to the anode layer site, where they match up with the converted reducing substance, i.e., protons, to form water and close the electric circuit. To provide for the mobility of the oxide ions in the oxide ion conducting solid state electrolyte, the SOFC needs to be operated at elevated temperatures, i.e., at over 600 °C.

In an example, the fuel cell is configured to convert the chemical energy of hydrogen to electricity, not shown in Fig. 1.

In an example, the fuel cell is configured to convert the chemical energy of molecular hydrogen to electricity, not shown in Fig. 1.

In an example, the fuel cell is configured to convert the chemical energy of molecular ammonia to electricity, not shown in Fig. 1.

In an example, the fuel cell is configured to convert the chemical energy of a hydrocarbon to electricity, not shown in Fig. 1.

In an example, the fuel cell is configured to convert the chemical energy of methane to electricity, not shown in Fig. 1.

In an example, the fuel cell is configured to convert the chemical energy of methanol to electricity, not shown in Fig. 1.

In an example, the fuel cell is configured to convert the chemical energy of carbon monoxide to electricity, not shown in Fig. 1.

The term "duct wall" relates to a physical barrier for molecules of a fuel for a fuel cell, but which is permeable for the reaction products of the energy converting reaction of the fuel cell, for example for oxide ions, electrons, or protons, to enable the reaction in the fuel cell. The duct wall 14 prevents the permeation of the molecules from an inner lumen enclosed by the duct wall 14 to the outside, the surrounding 20 of Fig. 1.

In an example, the duct wall 14 is a membrane, not shown in Fig. 1.

In an example, the duct wall 14 is a metallic membrane.

In an example, the duct wall 14 is a ceramic membrane.

In an example, the duct wall 14 is a tubular membrane duct.

In an example, the duct wall 14 is a membrane duct.

In an example, the duct wall 14 is configured to allow for diffusion of reaction products between the first supply flow 24 and the second supply flow 26, not shown in Fig. 1.

The term "tubular ducting volume" relates to the inner lumen formed by a tube or a pipe that can conduct a mass flow of, i.e., a fluid, and predetermine the direction of the mass flow.

The term "outer surface" relates to the face that encloses a tube or a pipe and is in contact to the environment of the tube or pipe, the surrounding 20 of Fig. 1, contrary to the inner lumen of the tube or pipe that is not in contact to the environment.

In an example, the outer surface 18 of the tube is coated with an electrochemically inactive gas tight layer, not shown in Fig. 1.

In an example, the outer surface 18 provides for thermal insulation, not shown in Fig. 1.

In an example, the outer surface 18 provides for electric insulation, not shown in Fig. 1.

The term "surrounding" relates to a space in a vehicle, such as an aircraft, or can also relate to a space enclosed by a housing or a chamber. The surrounding 20 can also be the external environment outside the vehicle.

The term "inner surface" relates to the face of a tube or pipe that is in contact to the inner lumen of the tube or pipe that is not in contact to the environment of the tube or pipe.

The term "supply flow" relates to a mass flow of molecules. The supply flow can be provided by a tank and compressors, not shown in Fig. 1.

The first supply flow 24 can also be referred to as supply flow or first flow.

The second supply flow can also be referred to as supply flow or second flow.

In an example, the supply flow is provided to the carrier structure 10 by supply lines and the supply lines are attached to the carrier structure 10 by dedicated adapters, not shown in Fig. 1.

In an example, the supply flow comprises pressurized fluid.

The term "oxidant" relates to a substance that can accept electrons.

In an example, the oxidant can be oxygen and/or hydrogen peroxide and/or nitrogen oxides.

The term "within the duct wall" relates to a property of the duct wall 14 in providing a radial cross section that is able to conduct a mass flow, as shown in Fig. 1.

In an example, there are channels, pores, holes or cavities within the duct wall 14 that form an empty volume space to conduct a fluid.

The term "reductant" relates to a substance that donates electrons.

The reductant can also be referred to as fuel, reducing agent or reducer.

In an example, the fuel comprises hydrogen.

In an example, the fuel comprises molecular hydrogen.

In an example, the fuel comprises molecular ammonia.

In an example, the fuel comprises a hydrocarbon.

In an example, the fuel comprises methane.

In an example, the fuel comprises methanol.

The term "separates" relates to the function of the duct wall 14 in preventing the direct contact of the first supply flow 24 and the second supply flow 26, such that, e.g., the reductant and the oxidant do not mix and react in Fig. 1.

The term "primary power coating layer" relates to an entity that enables the power converting function of the fuel cell. The primary power coating layer 28 comprises a cathode layer an electrolyte layer and an anode layer. The primary power coating layer 28 is electrochemically active in Fig. 1.

The primary power coating layer 28 can also be referred to as primary coating layer, primary layer, first power coating layer, or first layer.

In an example, the cathode layer is attached to the electrolyte layer and the electrolyte layer is attached to the anode layer in a sandwich structure of the primary power coating layer 28, not shown in Fig. 1.

In an example, the primary power coating layer 28 can be applied to the inner surface 22, such that the inner surface 22 has different structural orientations towards the sandwiched structure of the primary power coating layer 28, not shown in Fig. 1.

In an example, the inner surface 22 is provided in the cathode layer, not shown in Fig. 1.

In a further example, the inner surface 22 is provided between the cathode layer and the electrolyte layer, not shown in Fig. 1.

In a further example, the inner surface 22 is provided in the electrolyte layer, not shown in Fig. 1.

In a further example, the inner surface 22 is provided between the electrolyte layer and the anode, not shown in Fig. 1.

In a further example, the inner surface 22 is provided at the anode layer, not shown in Fig. 1.

In an example, the duct wall 14 comprises a structural contact area enlargement to enhance the contact surface to the primary power coating layer 28, not shown in Fig. 1.

In an example, the duct wall 14 comprises channels to allow permeation of the reaction products in the first supply flow 24 and the second supply flow 26 through the primary power coating layer 28, not shown in Fig. 1.

In an example, the duct wall 14 is made from the primary power coating layer 28, not shown in Fig. 1.

In an example, the duct wall 14 comprises the anode layer, not shown in Fig. 1.

In an example, to enhance the number of conversions of molecules in the fuel cell and the production of electric energy of the fuel cell, the pressure of the first and second supply flow 26 is enhanced.

In an example, the pressure of the first and second supply flow 26 is enhanced by a compressor, not shown in Fig. 1.

In an example the pressure in the tubular ducting volume 16 can be at around 4 bar and the pressure in the surrounding 20 can be at around 0.3 bar.

In an example the pressure in the tubular ducting volume 16 can be at around 4 bar and the pressure in the surrounding 20 can be at around 1 bar.

In an example, the pressure difference is in a range of about 3.7 bar.

In an example, not show in Fig. 1, the pressure difference between the tubular ducting volume 16 and the surrounding 20 results from the pressure of the first supply flow 24 being larger than the pressure of the second supply flow 26 being larger than the pressure in the surrounding 20.

In an example, the pressure of the first supply flow 24 is at around 4 bar, the pressure of the second supply flow 26 is at around 2 bar and the pressure in the surrounding 20 is at around 0.3 bar.

In an example, the pressure of the first supply flow 24 is at around 4 bar, the pressure of the second supply flow 26 is at around 2 bar and the pressure in the surrounding 20 is at around 1 bar.

In an example, the environmental atmosphere of the aircraft is used at its low pressure level within the surrounding 20. This way heat losses can be reduced and thermal insulation works more efficiently as the density and heat conductivity of the surrounding 20 atmosphere is reduced compared to pressurized conditions, not shown in Fig. 1.

In an example, the structure of the carrier structure 10 is adjusted to withstand the pressure gradient between first flow supply, second flow supply and the surrounding 20.

As an advantage, heat losses of a fuel cell can be reduced and thermal insulation works more efficiently.

In an example of Fig. 1, the duct wall 14 is based on an open-cellular structure 32. The open-cellular structure 32 is configured to enhance interconnection within the duct wall 14 to provide for its mechanical stability. The outer surface 18 and the inner surface 22 of the duct wall 14 are formed from more dense cell regions of the open-cellular structure 32 that are configured to separate the second supply flow 26 from the first supply flow 24 and the surrounding 20. The open-cellular structure 32 comprises less dense cell regions within the duct wall 14 to conduct the second supply flow 26.

The term "more dense cell regions" relates to regions of the open cellular structure that are less permeable or impenetrable for molecules, than the "less dense cell regions".

In an example, the "more dense cell regions" comprise more matter per volume than the "less dense cell regions".

In an example, the primary power coating layer 28 covers at least a part of the inner surface 22 formed by the dense cell region of the open-cellular structure 32.

In an example, the duct wall 14 is based on a porous structure, not shown in Fig. 1. The pore walls enhance the mechanical stability of the duct wall 14 through their interconnections. The outer surface 18 and the inner surface 22 of the duct wall 14 are formed from sealed pore regions of the porous structure that are configured to separate the second supply flow 26 from the first supply flow 24 and the surrounding 20. The porous structure comprises open pore regions within the duct wall 14 to conduct the second supply flow 26.

In an example, the open-cellular structure 32 comprises a honeycomb structure, not shown in Fig. 1, connecting the inner surface 22 to the outer surface 18 of the wall. The honeycomb structure is configured to conduct the second supply flow 26 along the duct wall 14.

In an example not shown in Fig. 1, the open-cellular structure 32 comprises a metal foam.

In an example, at least a part of the metal foam is coated with an anode layer.

In an example, at least a part of the metal foam is coated with the primary power coating layer 28.

In an example, the metal foam separates the reactant air with a high pressure, 1-10 bar, at the inside of the tube from the environmental surrounding air at the outside of the tube, which has a very low pressure at high flight altitudes.

In an example, the fuel, i.e., the first supply flow 24, is fed to the porous metal foam, the reactant air, i.e., the second supply flow 26, to the tubular ducting volume 16. The outer surface 18 of the metal foam is covered with a gas-tight and electrochemically inactive layer.

As an advantage, by the metal foam the fuel cell is capable of handling higher mechanical and shock loads because of its more elastic properties compared to ceramic support structures.

In an example of Fig. 1, the duct wall 14 is formed from a first tubular wall 34 and a second tubular wall 36 in a double-walled manner. The first tubular wall 34 encloses the tubular ducting volume 16. The first tubular wall 34 is coaxially surrounded by the second tubular wall 36 providing a flow space between the first tubular wall 34 and the second tubular wall 36. The first tubular wall 34 is held spaced apart from the second tubular wall 36 by a plurality of spacers allowing the second supply flow 26 within the flow space. At least the first tubular wall 34 allows a flow of the reductant from the flow space towards the inner surface 22.

In an example, the duct wall 14 is a mantle structure, as shown in Fig. 1.

In an example, the first tubular wall 34 is configured to provide an exchange of reaction products with the flow space between the two walls.

In an example, the second supply flow 26 flows in-between the first tubular wall 34 and a second tubular wall 36.

In an example, the first tubular wall 34 and the second tubular wall 36 form an annular interspace for receiving the second supply flow 26, as shown in Fig. 1.

In an example, at least a part of the spacers is covered with the primary power coating layer 28.

In an example, at least a part of the spacers is covered with an anode layer.

In an example not shown in Fig. 1, the primary power coating layer 28 covers at least a part of the inner surface 22 formed by the first tubular wall 34.

In an example of Fig. 1, a secondary power coating layer 38 is applied on the outer surface 18 of the duct wall 14 for being arranged between the second supply flow 26 and the surrounding 20 providing an auxiliary source of oxidant to react with the reductant of the second supply flow 26. The secondary power coating layer 38 is configured for providing electrical energy from the second supply flow 26 and the auxiliary source of oxidant.

The term "secondary power coating layer" relates to an entity that enables the power converting function of the fuel cell. The secondary power coating layer 38 comprises a cathode layer an electrolyte layer and an anode layer, not shown in Fig. 1.

The secondary power coating layer 38 can also be referred to as secondary coating layer, secondary layer, second power coating layer, or second layer.

In an example, the cathode layer is attached to the electrolyte layer and the electrolyte layer is attached to the anode layer in a sandwich structure.

In an example, the secondary power coating layer 38 can be applied to the outer surface 18, such that the outer surface 18 has different structural orientations towards the sandwiched structure of the primary power coating layer 28, not shown in Fig. 1.

In an example, the outer surface 18 is provided in the cathode layer, not shown in Fig. 1.

In a further example, the outer surface 18 is provided between the cathode layer and the electrolyte layer, not shown in Fig. 1.

In a further example, the outer surface 18 is provided in the electrolyte layer, not shown in Fig. 1.

In a further example, the outer surface 18 is provided between the electrolyte layer and the anode, not shown in Fig. 1.

In a further example, the outer surface 18 is provided at the anode layer, not shown in Fig. 1.

In an example, the cathode layer is applied facing away from the anode layer of the primary power coating layer 28, not shown in Fig. 1.

In an example, the cathode layer of the secondary power coating layer 38 faces to the surrounding 20 of the carrier structure 10, not shown in Fig. 1.

In an example, the secondary power coating layer 38 reacts with the air of the atmosphere in the surrounding 20 of the carrier structure 10 that acts as the auxiliary source of oxidant.

As an advantage, a fuel cell with an auxiliary power source can be provided.

Fig. 2 schematically shows a general scheme of an example of a fuel cell setup 100 and a fuel cell arrangement 200. The fuel cell setup 100 comprises at least one carrier structure 110 according to one of the previous examples and electric terminals 112. The electric terminals 112 comprise inner electric terminals 114a, 114b that are in electric contact with a primary power coating layer 128. The electric terminals 112 are configured to establish an electric power circuit by operating the carrier structure 110 with an oxidant flow and a reductant flow.

In an example, the inner electric terminals 114a, 114b are in contact to an anode layer and a cathode layer of the primary power coating layer 128, not shown in Fig. 2. The carrier structure 110 is configured to establish an electric power circuit via the inner terminals by operating the at least one carrier structure 110 with an oxidant flow and a reductant flow.

In an example of Fig. 2, the carrier structure 110 comprises a secondary power coating layer 138. The electric terminals comprise at least one outer electric terminal 140 that is in electric contact with the secondary power coating layer 138. The inner electric terminals 114a, 114b are configured to establish a first electric power circuit and the at least one outer electric terminal 140 is configured to establish a second electric power circuit.

The oxidant flow can also be referred to as first supply flow 24 comprising an oxidant.

The reductant flow can also be referred to as second supply flow 26 comprising a reductant.

In an example, the outer surface 18 of the tube is coated with an electrochemically active layer, which can be used as power boost during take-off conditions of the aircraft when more power is needed. This could be an add on functionality. Additional terminals, like the at least one outer electric terminal 140, for the outer cathode of the secondary power coating layer 138 would have to be implemented to either utilize the power during take-off conditions as well as applying a small short-cut current at cruise conditions.

As an advantage, a fuel cell with an auxiliary electric power circuit can be provided.

In an example, not shown in Fig. 2, the at least one outer electric terminal 140 is further configured for short-circuiting at the secondary power coating layer 138 to form at least one short circuit unit like done within the proposed solid oxide oxidation cell concept. The at least one short circuit unit is configured for a depletion of an auxiliary source of oxidant of a surrounding 20, not shown in Fig. 2.

In an example, the at least one outer electric terminal 140 is further configured to connect to the anode layer of the secondary power coating layer 138 to form at least one short circuit unit in order to close an electric circuit between the anode layer and the cathode layer of the second tubular membrane wall, not shown in Fig. 2. The at least one short circuit unit is configured at the outer surface 18 facing a surrounding 20 for depletion of oxidant from the surroundings 20, not shown in Fig. 2.

In an example, oxygen molecules are reduced at the outer surface 18 to oxide ions that are absorbed by the secondary power coating layer 138, not shown in Fig. 2.

In an example, the outer surface 18 of the tube is coated with an electrochemically active layer, which could be used to create an inert-gas atmosphere around the tubular cells during cruise conditions of an aircraft, not shown in Fig. 2. A small short-cut current is applied between the negative potential of the anode, i.e., anode layer, at the metal support and the outer cathode. The required electrical short-cut connection between these two electrodes can be implemented within the outer anode/electrolyte/cathode layer. The closed outer gas compartment of the cell is thus gradually depleted from oxygen to create an inert-gas atmosphere.

As an advantage, a more secure fuel cell is yielded.

Fig. 2 also schematically shows a general scheme of an example of a fuel cell arrangement 200. The fuel cell arrangement 200 comprises a housing 202 and at least one fuel cell setup 210 according to one of the previous examples. The least one fuel cell setup 210 is encased by the housing 202. A gap 212 between the at least one fuel cell setup 210 and the housing 202 forms a fluid receiving compartment for a fluid 214. The fluid prevents a contact of the at least one fuel cell setup 210 with a surrounding atmosphere 216 of the housing 202.

The housing can also be referred to as chamber, envelope, case, box or compartment.

In an example, due to the rigid design of the carrier structure 110 of the fuel cell setup 210, a lighter housing can be chosen.

In an example, the housing 202 comprises a thermal insulation, not shown in Fig. 2.

In an example, a reduced pressure of the fluid provides for thermal insulation of the fuel cell setup 210 in the housing 202.

In an example, the surrounding compartment, i.e., the housing 202 of the fuel cell arrangement 200 faces a minimum of pressure difference between the inside of the housing 202 and the environmental conditions. The mechanical housing, i.e., housing 202 can be constructed with thin walls and consequently light-weight designs. The low pressure level within the surrounding compartment, i.e., housing 202, furthermore reduces heat losses because the thermal insulation applied to the inner surface of the compartment works more efficiently as the gas density and heat conductivity within the insulation material is reduced compared to pressurized conditions.

In an example, the housing 202 comprises supply ports for the first and second supply flow 24, 26 to the at least one fuel cell setup 210, not shown in Fig. 2.

In an example of Fig. 2, the housing 202 further provides an access 218 of the fluid receiving compartment 214 to the surrounding atmosphere 216 for leveling a pressure of a protective fluid. The protective fluid comprises the surrounding atmosphere 216. The at least one fuel cell setup 210 converts the surrounding atmosphere 216 to the protective fluid when operating. The at least one fuel cell setup 210 generates an auxiliary electric power from the surrounding atmosphere 216 in the protective fluid.

In an example, the fuel cell setup 210 comprises the secondary power coating layer 38 or the short circuit unit at the outer surface 18, not shown in Fig. 2. The fuel cell setup 210 is encased in the housing 202 that comprises the fluid. Due to levelling of the pressure of the fluid with the surrounding atmosphere 216 of the housing 202, the fluid contains oxidant, like, i.e., oxygen. When the fuel cell setup 210 is operated in the housing 202 it will gradually convert the oxidant, i.e., oxidant in the fluid of the housing 202, such that all oxidant is removed from the fluid in the housing 202. This way an inert atmosphere is created in the housing 202. The levelling of the pressure might occur in a situation where the fuel cell arrangement 200 is aboard an aircraft, not shown in Fig. 2, and the aircraft is on ground after being on a flight mission. At flight mission, pressure in the housing 202 is at around 0.3 bar. At an aircraft on ground condition, pressure in the housing 202 is at around 1 bar. Moreover, this provides, in the case of the secondary power coating at the outer surface 18, auxiliary electric power that can be used in a case where additional power is required, e.g., when the aircraft takes off.

In an example, at aircraft cruise conditions, not shown in Fig. 2, the surrounding atmosphere 216 of the fuel cell set ups can be depleted from oxygen to create an inter-gas atmosphere which provides additional safety in case of fuel, like hydrogen, leakages into the stack compartment.

In an example, the secondary power coating layer 138 has an electrochemically active outer cathode, where the fuel is fed to the porous metal foam, i.e., the duct wall 14, the reactant air to the tubular ducting volume 16, not shown in Fig. 2, and the housing 202 with air at environmental conditions. The housing 202 here is designed as a closed housing 202 with a small connection to the environment atmosphere to enable a levelling of the outer and inner pressure of the mechanical housing 202. The outer active cathode is suited with some electrical short circuit connections, not shown in Fig. 2, between the outer cathode and the metal foam which has the anodic potential. The short circuit connection is designed in the way that only a small, short circuit current will gradually deplete the air inside the housing 202 from oxygen to create an inert gas atmosphere around the fuel cell setup 210. Additional safety in case of fuel, hydrogen, leakages into the stack compartment, i.e., housing 202, is realized by the inter-gas atmosphere. Consequently, a small portion of hydrogen is consumed during the start-up of the cells. Once the oxygen is fully depleted from the stack compartment, the short circuit current and hydrogen consumption via the outer active cell area, i.e., at the secondary power coating layer 138, would be interrupted naturally.

In an example, an electrochemically active outer cathode, i.e., the secondary power coating layer 138 is at the fuel cell setup 210. The fuel is fed to the porous metal foam, i.e., the duct wall 14, the first reactant air to the tubular ducting volume 16 and the stack compartment, i.e., housing 202 or compartment, with either the second reactant air at environmental conditions, the duct wall 14 and the tubular ducting volume 16 are not shown in detail in Fig. 2. The compartment is here optionally designed as an open and closed housing 202 to the environment atmosphere. The outer active cathode is used for two purposes. One purpose is to provide additional power at take-off operation of the aircraft when the atmospheric pressure is around 1 bar and thus provides a sufficient oxygen partial pressure for fuel cell operation. The electrical power from the outer cathode is supplied between an inner terminal and the at least one outer terminal. The stack compartment is hereby operated in an exchange of the reactant air with the environment to supply a sufficient amount of oxygen to the stack compartment. The other purpose considers that at cruise conditions, less power is required. The power can sufficiently be supplied by the inner active cathode between the inner terminals. A small and controlled electrical short circuit current is applied between the inner terminal and the at least one outer terminal to gradually deplete the oxygen from the stack compartment and finally create an inert-gas atmosphere within the stack compartment. Here, the compartment is operated as a closed housing 202 with a small connection to the environment atmosphere to enable a levelling of the outer and inner pressure of the mechanical housing 202.

As an advantage, a self-protecting fuel cell arrangement is provided.

As a further advantage, no heavy protection equipment is required at the fuel cell which saves weight.

As an advantage, not inert gas needs to be provided as the fluid beforehand.

As an advantage, at take-off operation of the aircraft the atmospheric pressure is around 1 bar and thus provides a sufficient oxygen partial pressure for fuel cell operation of the outer active area of the cell.

As an advantage, auxiliary electric power is provided by the fuel cell.

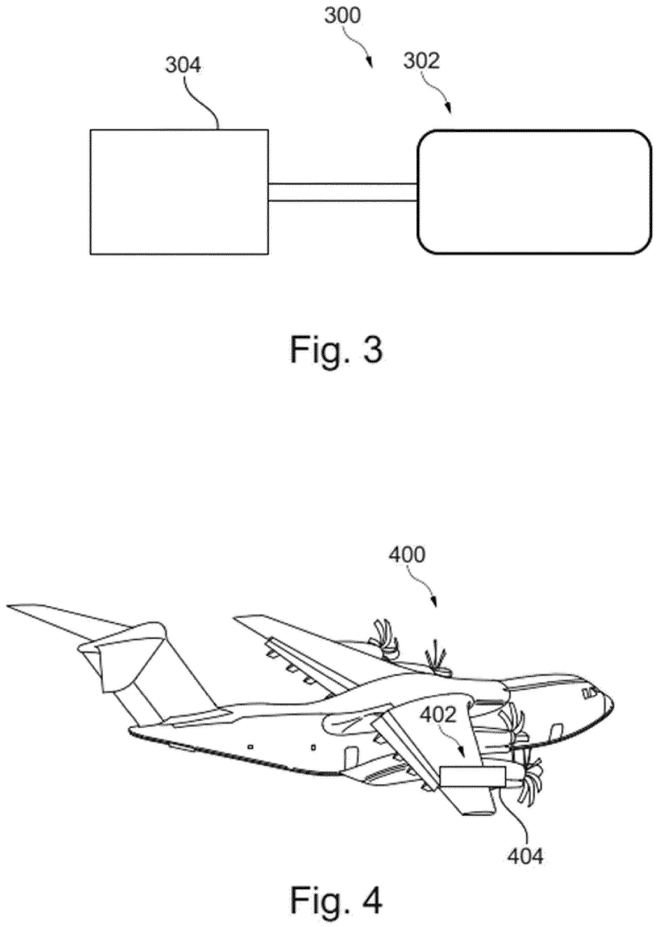

Fig. 3 schematically shows a general scheme of an example of an energy supply system 300. The energy supply system 300 comprises at least one fuel cell arrangement 302 according to one of the previous examples and a fuel reservoir 304. The fuel reservoir 304 is connected to the at least one fuel cell arrangement 302 to supply the second supply flow 26, not shown in Fig. 3. The at least one fuel cell arrangement 302 is configured to provide electric energy to power consuming loads.

In an example, the energy supply system 300 is configured to consider the auxiliary electric power provided by the secondary power coating.

Fig. 4 schematically shows an example of an aircraft 400 comprising at least one energy supply system 402. The aircraft 400 comprises at least one energy supply system 402 according to the previous example and at least one power consuming load 404. The least one power consuming load 404 comprises at least one of the group of: a propulsion system, electric avionic equipment and onboard electric devices for a cabin area. The least one power consuming load 404 is powered by the at least one energy supply system 402.

In an example, the aircraft 400 is on ground and the fuel cell arrangement 302 comprises surrounding atmosphere 216 in the housing 202, not shown in detail in Fig. 4. For taking off the aircraft 400 requires additional electrical power. This power is supplied by the fuel cell arrangement 302 converting the oxidant of the surrounding atmosphere 216 in its housing 202, not shown in detail in Fig. 4. On the flight mission all oxidant is used up in the housing 202 and the fuel cell setup 210 in the fuel cell arrangement 302 is immersed in an inert fluid stemming from the conversion of the oxidant of the surrounding atmosphere 216, not shown in detail in Fig. 4.

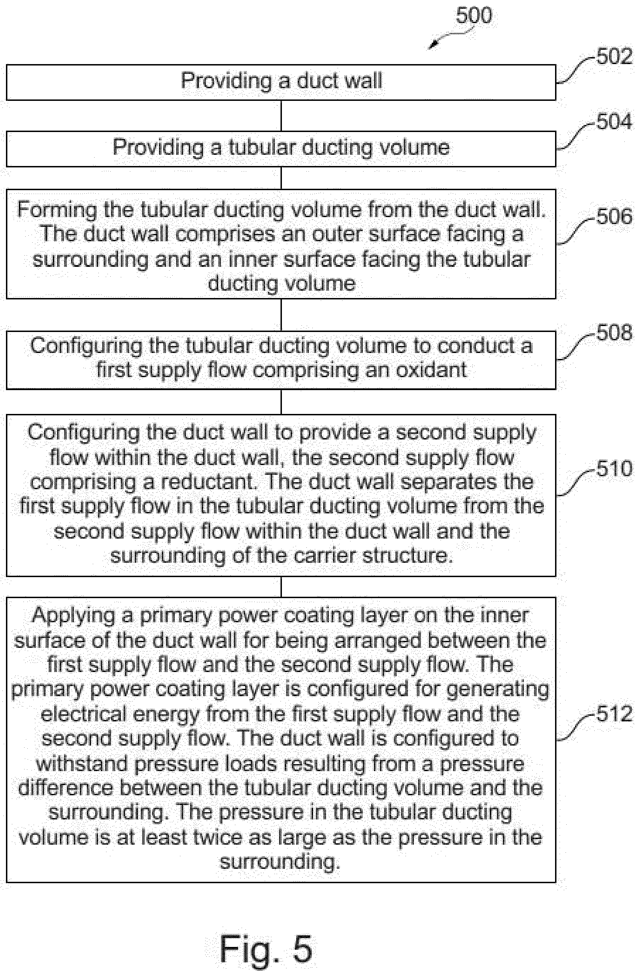

Fig. 5 shows basic steps of an example of a method 500 for providing a carrier structure 10 for electrodes 12 of a fuel cell, with reference to Fig. 1. The method 500 comprises the following steps:
- In a first step 502 a duct wall 14 is provided,
- In a second step 504 a tubular ducting volume 16 is provided, and
- In a third step 506 the tubular ducting volume 16 is formed from the duct wall 14. The duct wall 14 comprises an outer surface 18 facing a surrounding 20 and an inner surface 22 facing the tubular ducting volume 16,
- In a fourth step 508 the tubular ducting volume 16 is configured to conduct a first supply flow 24 comprising an oxidant,
- In a fifth step 510 the duct wall 14 is configured to provide a second supply flow 26 within the duct wall 14, the second supply flow 26 comprising a reductant. The duct wall 14 separates the first supply flow 24 in the tubular ducting volume 16 from the second supply flow 26 within the duct wall 14 and the surrounding 20 of the carrier structure 10 and
- In a sixth step 512 a primary power coating layer 28 is applied on the inner surface 22 of the duct wall 14 for being arranged between the first supply flow 24 and the second supply flow 26. The primary power coating layer 28 is configured for generating electrical energy from the first supply flow 24 and the second supply flow 26. The duct wall 14 is configured to withstand pressure loads 30 resulting from a pressure difference between the tubular ducting volume 16 and the surrounding 20. The pressure in the tubular ducting volume 16 is at least twice as large as the pressure in the surrounding 20.

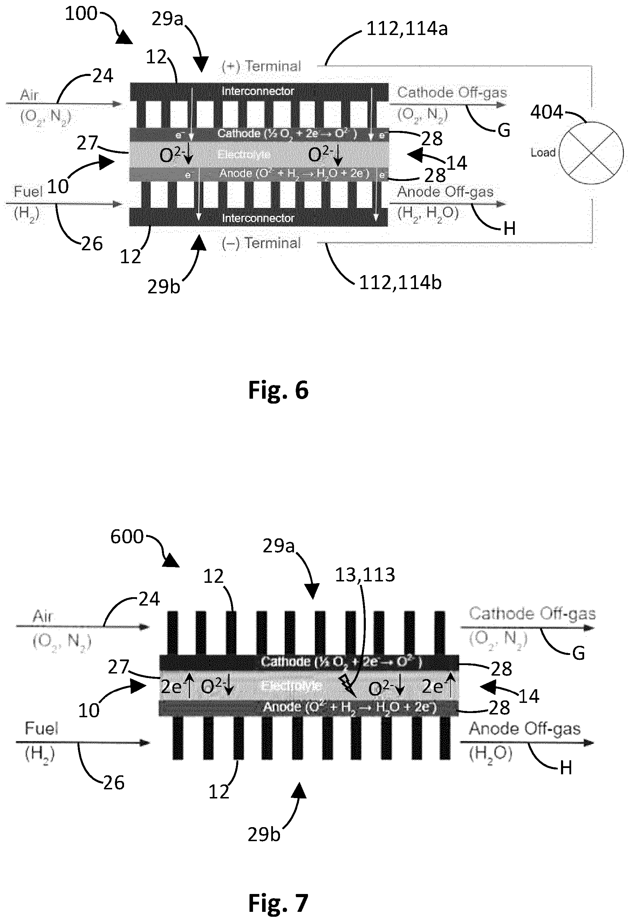

Fig. 6 schematically shows a general scheme of an exemplary solid oxide fuel cell setup 100. The fuel cell setup 100 comprises the support structure 10. The support structure 10 can provide the duct wall 14. The duct wall 14 may comprise an electrolyte layer 27. The primary coating layer 28 is applied to each side of the electrolyte layer 27, for example, to provide a cathode layer 29a, for example, as the upper layer 28, and the anode layer 29b, for example, as the lower layer 28. The cathode layer 29a faces the first supply flow 24 containing the oxidant, for example, air. The anode layer 29b faces the second supply flow 26 containing the reductant, for example, a fuel, such as hydrogen.

The basic structure of the fuel cell setup, such as an SOFC, can consist of a solid electrolyte layer 27 (usually a ceramic) positioned between the cathode layer 29a and the cathode layer 29b. Fuel is delivered to the anode and oxidant, typically air, is delivered to the cathode. The electrodes 12 can be provided as a solid porous structure that allows the fuel and air to diffuse to the electrolyte and the conversion products, i.e., exhausts G and further exhausts H, of the electrochemical reaction on the cathode side and the anode side to diffuse away from the electrolyte.

The electrolyte conducts the oxygen ions formed by the electrochemical reduction of molecular oxygen from the cathode side to the anode side of the fuel cell setup. Fuel diffuses through the anode to the anode/electrolyte interface. Here it reacts catalytically with the oxygen ions, releasing electrons that are transported through an external circuit, producing electricity, which can be provided to the power consuming load 404 via the electrical terminals 112, in particular the inner electric terminal 114a connected to the cathode layer 29a and the inner electric terminal 114b connected to the anode layer 29b.

Individual cells of the fuel cell setup 100 can be linked to each other by a metallic interconnect 12 in electrical series to increase voltage and power and can be stacked to achieve an optimal stack size. The interconnect can be either a metallic or ceramic layer that sits between each individual cell. Its purpose is to connect each cell in series, so that the electricity each cell generates can be combined. Because the interconnect is exposed to both the oxidizing and reducing side of the cell at high temperatures, it must be extremely stable. For this reason, ceramics have been more successful in the long term than metals as interconnect materials. However, these ceramic interconnect materials are very expensive when compared to metals. Nickel- and steel-based alloys are becoming more promising as lower temperature (<650 °C) SOFCs are under development. Current solid oxide fuel cells (SOFC) employ stabilized zirconia as electrolyte. However, due to its high resistivity to ionic current, fuel cells with this material have to be operated at temperatures of (650-850°C) and higher.

Decreasing the operation temperature to 650 °C reduces system cost and enhance the reliability. To achieve this, the ionic resistance of the fuel cell has to be lowered e.g. by application of an electrolyte material with a lower resistivity. Ceria based ionic conductors are promising candidates for such alternative electrolytes. They exhibit an ionic conductivity which is 3 to 5 times higher than that of zirconia electrolytes. However, at low oxygen partial pressures, such as they prevail at the anode side of SOFC, ceria is slightly reduced and develops additional n-type electronic conductivity. Thus, under SOFC operating conditions it is a mixed ionic electronic conductor and has a slight short-circuit current through the electrolyte (see Fig. 7.).

Fig. 7 schematically shows a general scheme of an exemplary solid oxide oxidation unit 600. The basic structure of the solid oxide oxidation unit 600, in particular, that of the support structure 10, the electrodes 12, the duct wall 14, the electrolyte layer 27, the primary coating layer 28, the cathode layer 29a and/or the anode layer 29b can be the same or at least similar to that of the fuel cell setup 100 as explained above. However, the solid oxide oxidation unit 600 differs from the fuel cell setup 100 in that at least one electrical conductor 13 can be provided by electrically conducting material 113. For example, the electrolyte layer 27 can be additionally at least partly doped with electrically conducting material 113. The electrically conducting material 113 can form an electrical conductor 13. By the electrical conductor 13 and/or electrically conducting material 113, a short circuit current by respective electron e travel is provided through the electrolyte 27.

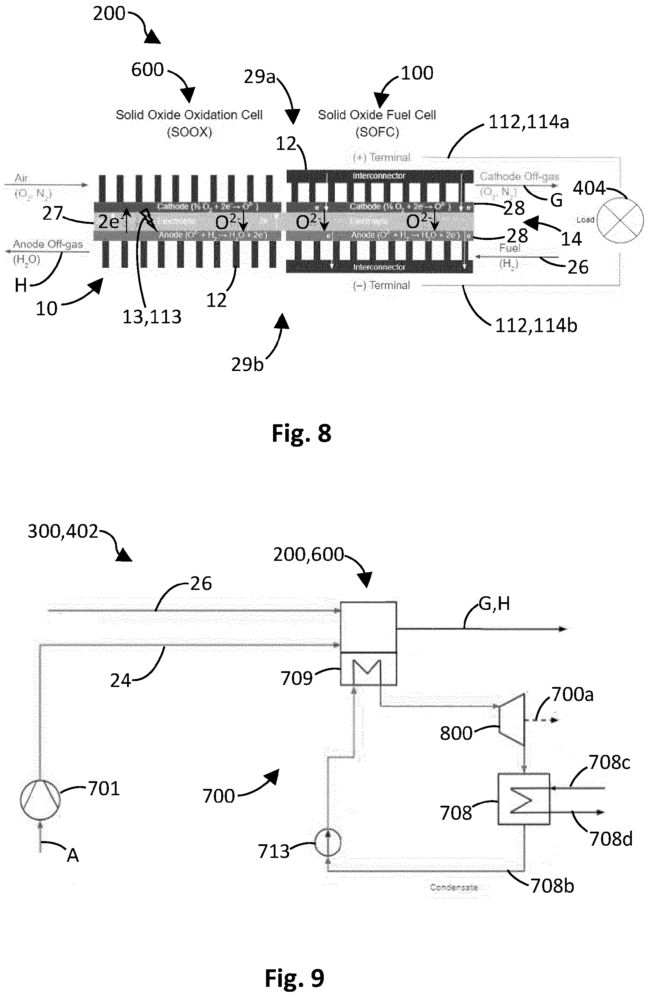

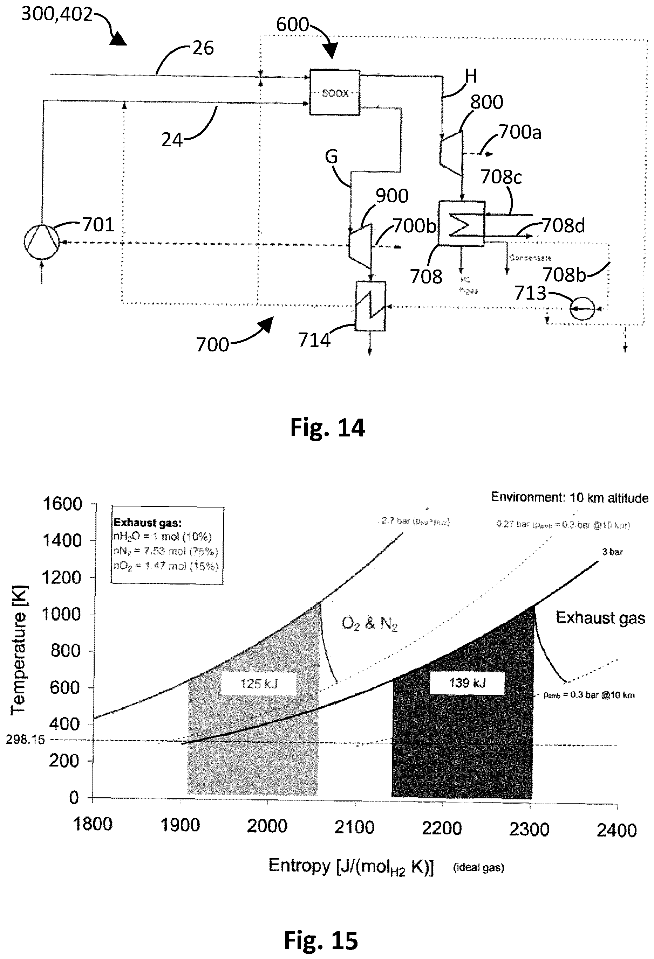

For example, the solid oxide oxidation unit 600 can be provided in the form of at least one a novel ceramic Solid Oxide Oxidation Cell (SOOX) by providing the electrolyte of a Solid Oxide Fuel Cell (SOFC) doped with electronically conducting material 113. Consequently, the solid oxide oxidation unit 600 does not directly by itself generate any electrical power. On the contrary, the enthalpy h of combustion is fully converted into heat similar to a typical combustion chamber. The difference to a typical combustion chamber here is a separation of the first supply flow 24, e.g., air, and the second supply flow 26, e.g., fuel-gases. This enables the usage of a directly coupled steam expansion for the anode off-gas which contains pure steam in case of that hydrogen is used as fuel (see Figs. 9 to 13 and configurations Figs. 14 to 21). Thus, higher efficiencies than an expansion of the mixed steam content in a typical gas-turbine can be achieved.

The solid oxide oxidation unit 600, for example, the form of an SOOX or stack thereof, can be operated at higher temperatures than a SOFC because current collectors are not required within the SOOX concept, which typically causes challenges of oxidation and contact losses at higher temperature regimes. In contrast, state of the art SOFCs are not able to convert 100% of the incoming fuel into steam because the low Nernst potential of the fuel-outlet composition would limit the electrical performance of the cell to zero. Thus, state of the art SOFCs cannot practically be used to deliver a pure steam containing anode-off-gas like the solid oxide oxidation unit 600 does.

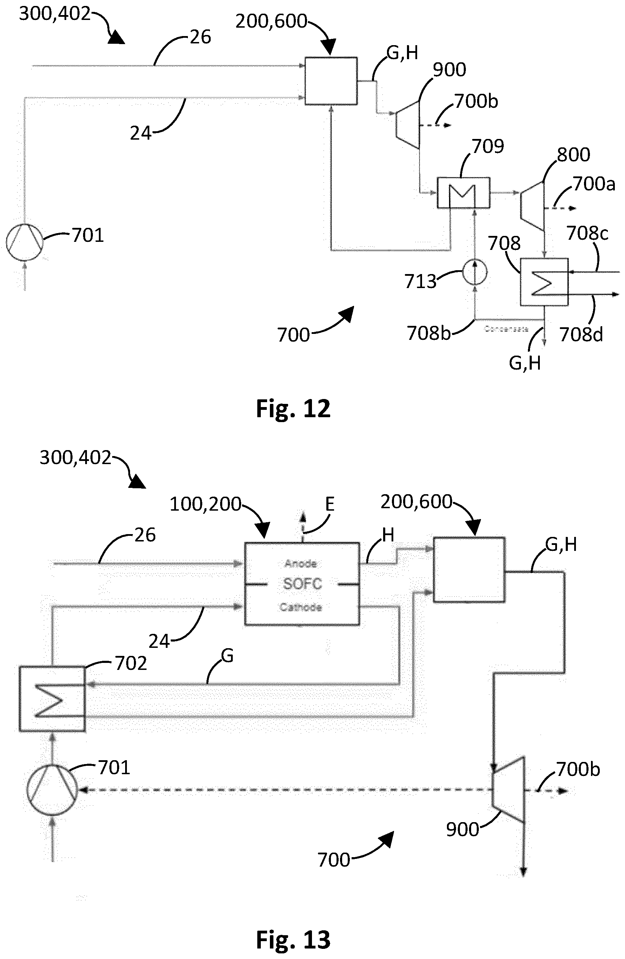

Fig. 8 schematically shows a general scheme of an exemplary fuel cell arrangement 200 comprising a solid oxide fuel cell setup 100 and a solid oxide oxidation unit 600, for example, as an integration and combination of the Solid Oxide Oxidation Cell (SOOX) and a Solid Oxide Fuel Cell (SOFC) where the SOOX concept is applied in series with the SOFC, downstream the fuel flow and upstream the air flow. Thereby, the residual fuel which cannot be oxidized in the SOFC will further and fully be converted within the SOOX section, where the generated heat of the SOOX is used to preheat the incoming cold air. This reduces the size of the air preheater 702 (see, e.g., Fig. 13) for the fuel cell arrangement 200. This allows to couple the fuel cell arrangement 200 with thermodynamic devices 700 generating electrical and/or mechanical energy by expanding the exhausts G and/or the further exhausts H (see Figs. 9 to 21).

Fig. 9 schematically shows a general scheme of an exemplary energy supply system 300, 402 comprising a solid oxide oxidation unit 600 and/or fuel cell arrangement 200 used in conjunction with a steam turbine arrangement 800 used as a part of a respective thermodynamic device 700. The steam turbine arrangement 800 makes use of a respective heat engine cycle. Heat engine cycles are developed to convert heat, delivered typically by combustion of a fuel, into technical work.

Similar to a power-plant cycle (the name "Rankine" cycle is used only for the ideal cycle), compression of the first supply flow 24 by a compressing device 701 and the expansion in the steam turbine arrangement 800 are not isentropic. In other words, these processes are non-reversible, and entropy is increased during the two processes. This somewhat increases the power required by the comprising device 701, which can be used for compressing the first supply flow 24, e.g., in the form of air A which may be taken up from respective ambient surroundings, and decreases the power generated by the steam turbine arrangement 800.

For example, Fig. 9 illustrates working principles of an indirect hydrogen steam turbine cycle where the media for conversion, e.g., hydrogen contained in the second supply flow 26 and air contained in the first supply flow 24 and the respective exhausts G and the further exhausts can be separated from the steam turbine cycle by a heat exchanger 709. The efficiency of the steam turbine arrangement 800 generating mechanical and/or electrical energy by means of a respective output shaft 700a will be limited by water-droplet formation within a respective turbine. As the water condenses, water droplets hit the turbine blades at high speed, causing pitting and erosion, gradually decreasing the life of turbine blades and efficiency of the turbine.

The easiest way to overcome this problem is by superheating the steam, i.e., the exhausts G and the further exhausts H. In a respective T-S-diagram above, the state of the condensate outflow 708b should be at a border of the two-phase region of steam and water, so after expansion the steam will be very wet. By superheating with the heat exchanger 709, the condensate outflow 708b will move to the right (and up) in the T-S-diagram and hence produce a drier steam after expansion. Alternatively, additionally, efficiency of the cycle can be enhanced by cooling down the exhausts as they leave the steam turbine arrangement 800 and a respective heat exchange unit 708 which can be operated as a condenser and cool down the exhausts by means of a coolant input 708c which takes up heat from the exhausts and can be then discharged as a coolant output 708d. Condensed water can be provided to the heat exchanger 709 by means of a pump unit 713. Nevertheless, the efficiency of such a steam-based process is further limited by the relatively low temperature of evaporation of the water, which causes a high entropy generation and thus loss of potential technical work while the high-temperature heat of combustion is transferred to the much lower temperature of evaporation.

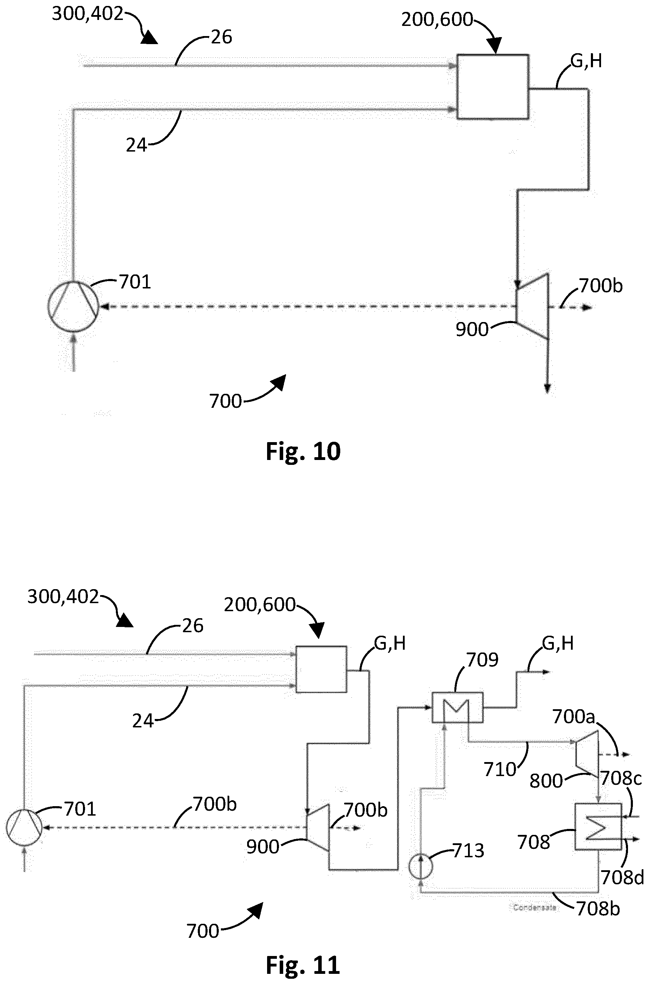

Fig. 10 schematically shows a general scheme of an exemplary energy supply system 300, 402 comprising a solid oxide oxidation unit 600 and/or fuel cell arrangement 200 used in conjunction with a gas turbine arrangement 900 having a respective output shaft 700b for generating mechanical and/or electrical energy. The efficiency of this process is rather limited by the isobaric step (idealized Bryton cycle) in closing the cycle from the outlet of the turbine to the inlet conditions of the compressing unit 701, which results in high entropy production as sensible heat of the exhaust gas G, H is dissipated into the environment. The Rankine cycle is in this perspective much more efficient as the waste heat of condensation in the heat exchange unit 708 is transferred close to the environmental temperature level by an almost isothermal process step. To make use out of the benefits of both processes (Rankine and Bryton) the combined cycle gas turbine can be applied as shown in Fig. 11 had been developed.

Fig. 11 schematically shows a general scheme of an exemplary energy supply system 300, 402 comprising a solid oxide oxidation unit 600 and/or fuel cell arrangement 200 used in conjunction with a combined cycle arrangement of the thermodynamic device 700 comprising a steam turbine arrangement 800 and a gas turbine arrangement 900. Here, the residual sensible heat of the exhaust gas G, H from the gas turbine arrangement 900 is further used to generate steam 710 in the heat exchange unit 709 and drive the steam turbine arrangement 800.

Fig. 12 schematically shows a general scheme of an exemplary energy supply system 300, 402 comprising a solid oxide oxidation unit 600 and/or fuel cell arrangement 200 used in conjunction with another combined cycle arrangement for essentially pure hydrogen and essentially pure oxygen operation. The present example implements a direct coupling of the media used in the gas turbine arrangement 900 and the steam turbine arrangement 800. Here, the superheated exhaust gasses G, H are expanded in the gas turbine 900 prior to entering a heat exchange unit 709 configured as an evaporator which is used to increase the total heat capacity flow in the solid oxide oxidation unit 600 and/or fuel cell arrangement 200 and thus the specific work of the cycle by a respective steam injection into the a solid oxide oxidation unit 600 and/or fuel cell arrangement 200. This process can be particularly efficient if pure oxygen is available for oxidation. Otherwise, inert gases like in air e.g. would lead to an increase in the outlet pressure of the steam turbine 800.

Fig. 13 schematically shows a general scheme of an exemplary energy supply system 300, 402 comprising a fuel cell arrangement 200 and a solid oxide oxidation unit 600 used in conjunction with a gas turbine arrangement 900. The fuel cell arrangement 200 and the solid oxide oxidation unit 600 can be configured like or at least similarly to the fuel cell setup 100 and solid oxide oxidation unit 600 illustrated in Fig. 8. In such a hybrid, waste heat of an SOFC into can be converted into mechanical and/or electrical energy by means of the gas turbine arrangement 900. The fuel cell setup 100 and/or fuel cell arrangement 200 arrangement can be used to generate electrical energy E to drive an electrical load 404 as shown in Figs. 7 and 9. The first supply flow 24 supplied to the fuel cell setup 100 and/or fuel cell arrangement 200 can be preheated by means the exhaust G in a respective heat exchange unit 702,

The respective gas turbine cycle can be considered as a bottoming cycle for an SOFC. Direct and indirect couplings with the Brayton cycle can be considered in different variations like the simple, recuperated or reheated gas turbine, humid air turbine (HAT), steam injected gas turbine (STIG) and chemically recuperated gas turbine (CRGT). Combinations with the Rankine cycle can be implemented covering the entire temperature range from close to ambient conditions for the organic Rankine cycle (ORC) up to the operation temperature of the SOFC using alkali metals as working fluid. Even more advanced hybrids with alkali-metal thermal to electric converter (AMTEC), Stirling engine and also other types of fuel cells can be used. Respective electrical efficiencies vary in a broad range from 50% up to 80%. However, already a comparable simple combination of SOFC and gas turbine like shown in Fig. 13, promises system efficiencies in the range of 70% (SOFC-electrical + GT-mechanical power).

Fig. 14 schematically shows a general scheme of an energy supply system 300, 402 comprising a solid oxide oxidation unit 600 used in conjunction with a gas turbine arrangement 900 and a steam turbine arrangement 800 operated in parallel to each other. In such an arrangement, the exhausts G can be fully separated from the further exhausts H. Condensed water from the heat exchange unit 708 operated as a condenser can be fed back through another exchange unit 714 by the pumping device 713 in order to supply respective steam heated up by means of the exhausts G from the gas turbine arrangement 900 to the solid oxide oxidation unit 600. For example, the steam can be fed back to the first supply flow 24 as that on the second supply flow 26. Moreover, condensed water can be fed back from the pumping devices 13 to the second supply flow 26.

Fig. 15 shows an exemplary T-S diagram based on the calculated expansion of exhausts (139 kJ) in the energy supply system 300, 402 shown in Fig. 10 and the separate expansion of the oxidant exhaust G (125 kJ) shown in Fig. 14 operated at 10 km altitude.

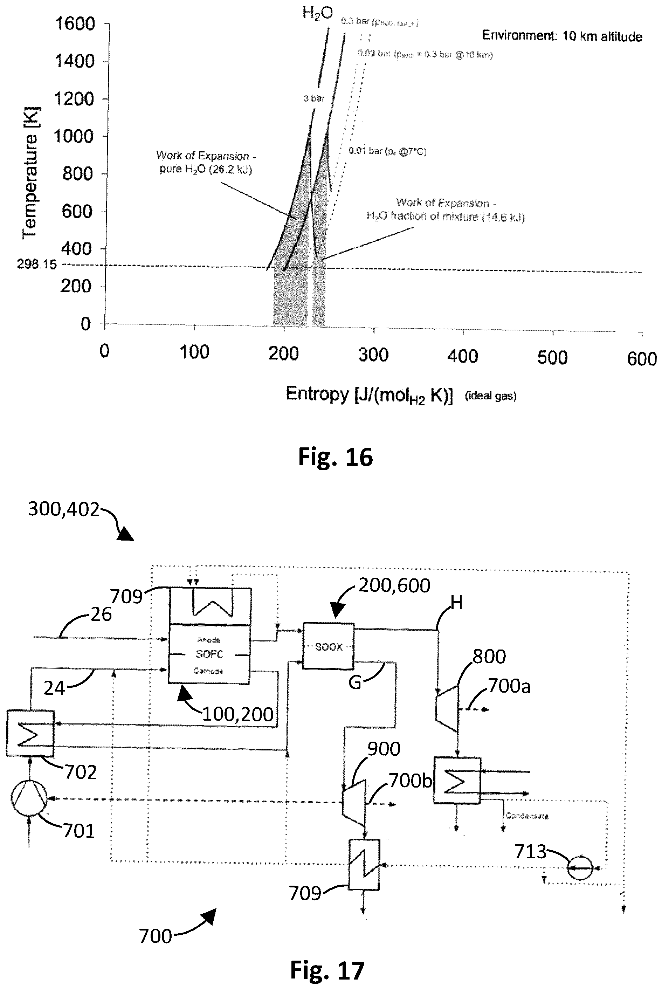

Fig. 16 shows another exemplary T-S diagram based on the calculated the expansion of the water vapor fraction (14.6 kJ) within the exhaust of the the energy supply system 300, 402 shown in Fig. 10 which can be enhanced to the expansion of the further exhausts H (26.2 kJ) in the energy supply system 300, 402 shown in Fig. 14 operated at10 km altitude.

Figs. 15 and 16 illustrate the additional technical work of expansion which may be obtained by separating the exhausts G and the further exhausts H from each other, for example by a separation of the product water from the depleted air stream. The area on the right side of diagram Fig. 15 represents the work of expansion from gas turbine 900 as illustrated in Fig. 10. Respective environmental conditions are chosen for a turbofan engine 402 at 10 km altitude with a cycle pressure of 3 bar_abs. For example, such a gas turbine arrangement 900 operated with a mixed exhaust gas G, H provides 139 kJ of technical work per mol H2 that is oxidized within the solid oxide oxidation unit 600. The O2 and N2 fraction contributes with 125 kJ (Fig. 15 - left integral area) and the steam fraction with 14 kJ (Fig. 16 - right integral area) to the work of the gas turbine arrangement 900.

If pure steam is available like from a solid oxide oxidation unit 600 as further exhausts H, the steam turbine outlet pressure is determined by the saturation vapor pressure of the condenser. At 7°C a pressure of 10 mbar_abs can be realized, which provides a technical work for the expansion between 3 bar_abs and 0.01 bar_abs of 26 kJ (Fig. 16 - left integral area). Adding the work of the separate expansion of the further exhausts G, e.g., air with 125 kJ between 3 bar_abs and 0.3 bar_abs environmental pressure at 10 km altitude, would provide 151 kJ work in total for the separated expansion compared to 139 kJ for the expansion of the mixed exhaust gas stream G, H. Hence, 12 kJ of more technical work increases the overall efficiency of technical work by 9% related to the lower heat value of hydrogen (241 kJ/mol).

Fig. 17 schematically shows a general scheme of an exemplary energy supply system 300, 402 comprising a fuel cell arrangement 200 and a solid oxide oxidation unit 600 used in conjunction with a gas turbine arrangement 900 and a steam turbine arrangement 800 operated in parallel to each other. The present example can be regarded as a derivative of the SOOX cycle, where a SOFC is implemented to further increase the overall efficiency of the cycle. In such a cycle, additional water can be accumulated optionally from the product water (dotted lines) and used like in a steam injected gas turbine arrangement 900 e.g. to further increase the efficiency and specific work of the cycle. Respective water and/or steam can be additionally heated up by means of the exchange unit 709 arranged at the fuel cell site of 100 and/or fuel cell arrangement 200 as described above.

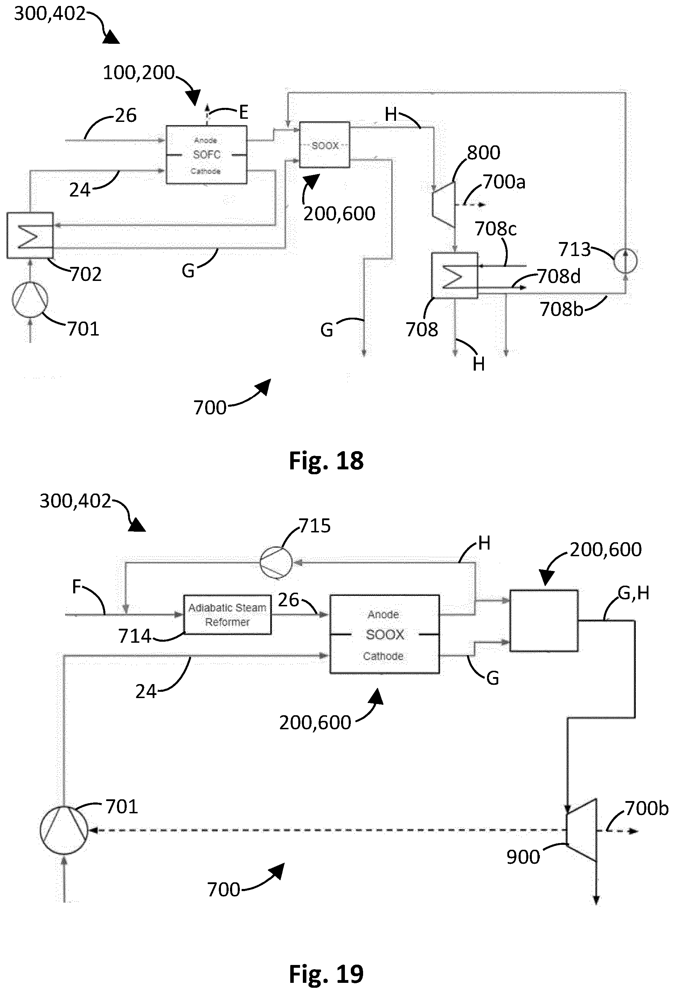

Fig. 18 schematically shows a general scheme of another exemplary energy supply system 300, 402 comprising a fuel cell arrangement 200 used in conjunction with a solid oxide oxidation unit 600 and a steam turbine arrangement 800. The present example can be seen as another derivative, in particular for ground operation or environmental pressure levels where pressurization would be not mandatorily be required is shown in Fig. 17. In the present example, the compression device 701 can be provided in the form of a simple fan is used for the air cycle. Even without the gas turbine arrangement 900, the efficiency of the shown system is 19% higher compared to an atmospheric SOFC, due to the utilization of the steam turbine arrangement 800 which can optionally make use of a pump 713 in order to provide condensed water to the second supply flow 26 and/or further exhausts H at a point between the fuel cell arrangement 200 and the solid oxide oxidation unit 600.

Fig. 19 schematically shows a general scheme of another exemplary energy supply system 300, 402 comprising a reformer unit 714 and a fuel cell arrangement 200 as well as a solid oxide oxidation unit 600 used in conjunction with a gas turbine arrangement 900. In the present example, a combination of the SOOX and a reformer unit 714 in the form of a prereformer for hydrocarbon fuels F like sustainable aviation fuel, e.g., hydrocarbons and in particular higher hydrocarbons are prone to form particles during their spontaneous combustion. Catalytic combustion chambers could be a remedy but would also compromise the efficiency of the gas turbine arrangement 900 as the turbine inlet temperature would be reduced to the maximum allowable temperature of the catalyst.

In the example shown in shown in Fig. 19, where the fuel F, for example, hydrocarbons, are converted into H₂, CO, CO₂, H2O and CH₄ within the reformer unit 7 and 14, for example an adiabatic prereformer, before they enter the solid oxide oxidation unit 600 as the second supply flow 26 and then may further downstream led to another solid oxide oxidation unit 600 and/or a high temperature combustion chamber for further oxidation. The reforming reaction requires a certain amount of additional steam, H2 and CO that can be provided by an anode-gas recycle of the further exhausts H through a respective pump and/or compressing unit 715. This concept drastically reduces emissions like particulates and NOx while the turbine inlet temperature can still be kept above 1300°C in order to maintain a high cycle efficiency.

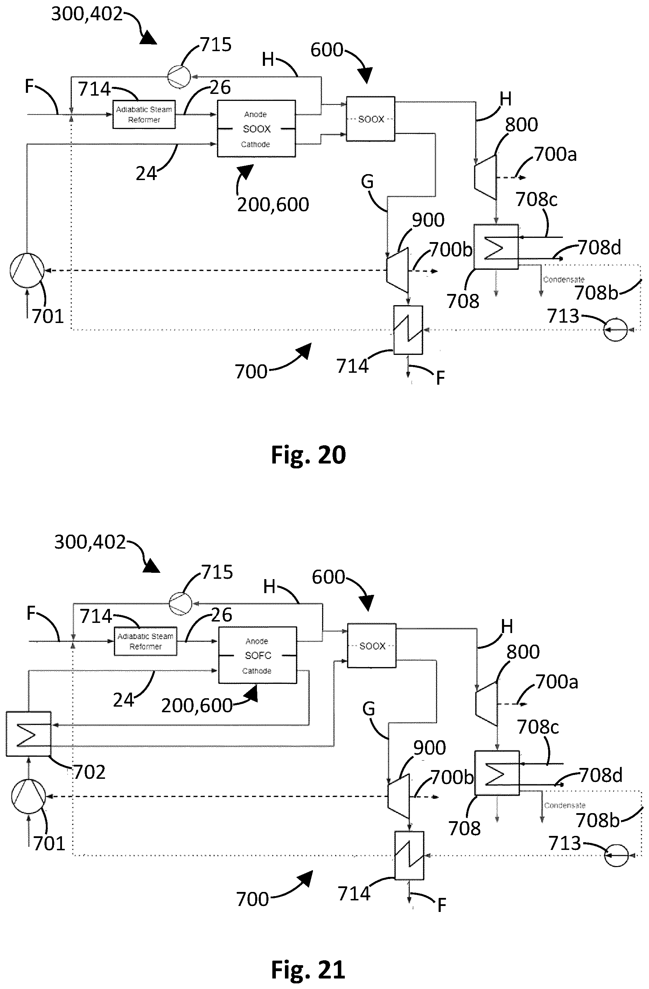

Fig. 20 schematically shows a general scheme of an exemplary energy supply system 300, 402 comprising a reformer unit 714 and a fuel cell arrangement 200 used in conjunction with a solid oxide oxidation unit 600 and a gas turbine arrangement 900 and a steam turbine arrangement 800 operated in parallel to each other. The present example may be seen as a derivative of example shown in Fig. 19 combined with the steam turbine arrangement 800. The example shown in Fig. 20 allows for very efficient CO2 capturing downstream the condenser 708 and recycling of carbon C, for example in the form of CO₂, which can then be reused, e.g., in Fischer-Tropsch fuels. The benefit here is that the cycle provides almost a pure CO₂ stream, which doesn't require any further cleaning or separation process. Another advantage is that the separated steam turbine arrangement 800 can also be used to accumulate water (dotted line) from the product water stream to provide additional steam to the reforming unit 714 if required.

Fig. 21 schematically shows a general scheme of another exemplary energy supply system 300, 402 comprising a reformer unit 714 and a fuel cell arrangement 200 used in conjunction with a gas turbine arrangement 900 and a steam turbine arrangement 800 operated in parallel to each other. Here, again exhausts G and further exhausts H from the fuel cell arrangement 200 can be provided to the solid oxide oxidation unit 600. The present example may thus be understood as a derivative of the example shown in Fig. 21, where a SOFC can be stored as being implemented to further increase the overall efficiency of the cycle while an additional heat exchange unit 702 is used for exchange between the exhaust G leaving the fuel cell arrangement 200 and entering the solid oxide oxidation unit 600 on the one side as well as the compressed first supply flow 24, e.g., air A,

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

### ASPECTS:

1. A carrier structure (10) for electrodes (12) of a fuel cell, the structure comprising:
   - a duct wall (14); and
   - a tubular ducting volume (16);
      wherein the duct wall forms the tubular ducting volume and comprises an outer surface (18) facing a surrounding (20) and an inner surface (22) facing the tubular ducting volume;
      wherein the tubular ducting volume is configured to conduct a first supply flow (24) comprising an oxidant;
      wherein the duct wall is configured to provide a second supply flow (26) within the duct wall, the second supply flow comprising a reductant;
      wherein the duct wall separates the first supply flow in the tubular ducting volume from the second supply flow within the duct wall and the surrounding of the carrier structure;
      wherein a primary power coating layer (28) is applied on the inner surface of the duct wall for being arranged between the first supply flow and the second supply flow;
      wherein the primary power coating layer is configured for generating electrical energy from the first supply flow and the second supply flow;
      wherein the duct wall is configured to withstand pressure loads (30) resulting from a pressure difference between the tubular ducting volume and the surrounding; and
      wherein the pressure in the tubular ducting volume is at least twice as large as the pressure in the surrounding.
2. Structure according to aspect 1, wherein the pressure difference between the tubular ducting volume and the surrounding results from the pressure of the first supply flow being larger than the pressure of the second supply flow being larger than the pressure in the surrounding.
3. Structure according to aspect 1 or 2, wherein the duct wall is based on an open-cellular structure (32);
   wherein the open-cellular structure is configured to enhance interconnection within the duct wall to provide for its mechanical stability;
   wherein the outer surface and the inner surface of the duct wall are formed from more dense cell regions of the open-cellular structure that are configured to separate the second supply flow from the first supply flow and the surrounding; and
   wherein the open-cellular structure comprises less dense cell regions within the duct wall to conduct the second supply flow.
4. Structure according to aspect 3, wherein the open-cellular structure comprises a metal foam.
5. Structure according to one of the preceding aspects, wherein the duct wall is formed from a first tubular wall (34) and a second tubular wall (36) in a double-walled manner;
   wherein the first tubular wall encloses the tubular ducting volume;
   wherein the first tubular wall is coaxially surrounded by the second tubular wall providing a flow space between the first tubular wall and the second tubular wall;
   wherein the first tubular wall is held spaced apart from the second tubular wall by a plurality of spacers allowing the second supply flow within the flow space; and
   wherein at least the first tubular wall allows a flow of the reductant from the flow space towards the inner surface.
6. Structure according to aspect 5, wherein the primary power coating layer covers at least a part of the inner surface formed by the first tubular wall.
7. Structure according to one of the preceding aspects, wherein a secondary power coating layer (38) is applied on the outer surface of the duct wall for being arranged between the second supply flow and the surrounding providing an auxiliary source of oxidant to react with the reductant of the second supply flow; and
   wherein the secondary power coating layer is configured for providing electrical energy from the second supply flow and the auxiliary source of oxidant.
8. A fuel cell setup (100), comprising:
   - at least one carrier structure (110) according to one of the preceding aspects; and
   - electric terminals (112);
      wherein the electric terminals comprise inner electric terminals (114a, 114b) that are in electric contact with a primary power coating layer (128); and
      wherein the electric terminals are configured to establish an electric power circuit by operating the carrier structure with an oxidant flow and a reductant flow.
9. Fuel cell setup according to aspect 8, wherein the carrier structure comprises a secondary power coating layer (138); and
   wherein the electric terminals comprise at least one outer electric terminal (140) that is in electric contact with the secondary power coating layer; and
   wherein the inner electric terminals are configured to establish a first electric power circuit and the at least one outer electric terminal is configured to establish a second electric power circuit.
10. Fuel cell setup according to aspect 8 or 9, wherein the at least one outer electric terminal is further configured for short-circuiting at the secondary power coating layer to form at least one short circuit unit; and
   wherein the at least one short circuit unit is configured for a depletion of an auxiliary source of oxidant of a surrounding.
11. A fuel cell arrangement (200), comprising:
   - a housing (202); and
   - at least one fuel cell setup (210) according to one of the aspects 8 to 10;
      wherein the least one fuel cell setup is encased by the housing;
      wherein a gap (212) between the at least one fuel cell setup and the housing forms a fluid receiving compartment for a fluid (214); and
      wherein the fluid prevents a contact of the at least one fuel cell setup with a surrounding atmosphere (216) of the housing.
12. Fuel cell arrangement, according to aspect 11, wherein the housing further provides an access (218) of the fluid receiving compartment to the surrounding atmosphere for leveling a pressure of a protective fluid;
   wherein the protective fluid comprises the surrounding atmosphere;
   wherein the at least one fuel cell setup converts the surrounding atmosphere to the protective fluid when operating; and
   wherein the at least one fuel cell setup generates an auxiliary electric power from the surrounding atmosphere in the protective fluid.
13. An energy supply system (300) comprising:
   - at least one fuel cell arrangement (302) according to aspect 11 or 12; and
   - a fuel reservoir (304);
      wherein the fuel reservoir is connected to the at least one fuel cell arrangement to supply the second supply flow; and
      wherein the at least one fuel cell arrangement is configured to provide electric energy to power consuming loads.
14. An aircraft (400), comprising:
   - at least one energy supply system (402) according to aspect 13; and
   - at least one power consuming load (404);
      wherein the least one power consuming load comprises at least one of the group of: a propulsion system, electric avionic equipment and onboard electric devices for a cabin area; and
      wherein the least one power consuming load is powered by the at least one energy supply system.
15. A method (500) for providing a carrier structure for electrodes of a fuel cell, comprising the following steps:
   - Providing (502) a duct wall;
   - Providing (504) a tubular ducting volume; and
   - Forming (506) the tubular ducting volume from the duct wall, wherein the duct wall comprises an outer surface facing a surrounding and an inner surface facing the tubular ducting volume;
   - Configuring (508) the tubular ducting volume to conduct a first supply flow comprising an oxidant;
   - Configuring (510) the duct wall to provide a second supply flow within the duct wall, the second supply flow comprising a reductant;
      wherein the duct wall separates the first supply flow in the tubular ducting volume from the second supply flow within the duct wall and the surrounding of the carrier structure; and
   - Applying (512) a primary power coating layer on the inner surface of the duct wall for being arranged between the first supply flow and the second supply flow;
      wherein the primary power coating layer is configured for generating electrical energy from the first supply flow and the second supply flow;
      wherein the duct wall is configured to withstand pressure loads resulting from a pressure difference between the tubular ducting volume and the surrounding; and
      wherein the pressure in the tubular ducting volume is at least twice as large as the pressure in the surrounding.

## Claims

1. Solid oxide oxidation unit (600) for converting at least one reductant to thermal energy under the production of exhausts (G) and further exhausts (H) from a first supply flow (24) comprising an oxidant and a second supply flow (26) comprising the reductant, respectively;
the solid oxide oxidation unit (600) comprising
a duct wall (14) configured for separating the first supply flow (24) from the second supply flow and at least sectionwise comprising an electrolyte layer allowing for a transfer of ions of the oxidant to the reductant;
wherein the duct wall (14) comprises an electrically conducting material (113) allowing for a transfer of electrons from the reductant to the oxidant for enabling a full oxidation of the reductant contained in the second supply flow (26).

2. Solid oxide oxidation unit (600) according to claim 1, wherein the duct wall (14) and/or the electrolyte layer comprise and/or comprises, respectively, a ceramic oxide.

3. Solid oxide oxidation unit (600) according to claim 1 or 2, wherein the electrolyte layer is at least partly doped with the electrically conducting material.

4. Solid oxide oxidation unit (600) according to at least one of claims 1 to 3, wherein a cathode layer is attached to the electrolyte layer and the electrolyte layer is attached to an anode layer in a sandwich structure.

5. Solid oxide oxidation unit (600) according to at least one of claims 1 to 4, configured to be operated at elevated temperatures over 600°C, preferably over 800°C, most preferably around or over 1000°C

6. Fuel cell arrangement (200) comprising at least one solid oxide oxidation unit (600) according to at least one of claims 1 to 5 and at least one fuel cell setup (100) comprising a carrier structure (10) comprising a duct wall;
wherein a primary power coating layer (28) is applied on a surface of the duct wall for being arranged between the first supply flow and the second supply flow; and
wherein the primary power coating layer (28) is configured for generating electrical energy from the first supply flow and the second supply flow.

7. Fuel cell arrangement (200) according to claim 6, wherein the solid oxide oxidation unit (600) is arranged upstream of the first supply flow (24) and/or downstream of the second supply flow (26) with respect to the fuel cell setup (100) for enabling a full oxidation of the reductant contained in the second supply flow (26).

8. Energy supply system (300), comprising at least one solid oxide oxidation unit (600) according to at least one of claims 1 to 5, and/or at least one fuel cell arrangement (200) according to claim 6 or 7.

9. Energy supply system (300) according to claim 8, further comprising a at least one gas turbine arrangement (900) configured for generating mechanical and/or electrical energy by expanding the exhausts (G) and/or comprising at least one steam turbine arrangement (800) for generating mechanical and/or electrical energy by expanding the further exhausts (H).

10. Energy supply system (300) according to at least one of claim 8, wherein the at least one gas turbine arrangement (900) and the at least one steam turbine arrangement (800) are configured to be operated in parallel.

11. Energy supply system (300) according to at least one of claims 8 to 10, configured to at least partly feed the further exhausts (H) back to at least one reforming unit (714), solid oxide oxidation unit, and/or the fuel cell arrangement (200).

12. Energy supply system (300) according to at least one of claims 8 to 11, further comprising at least one heat exchange unit configured to condensate water (W) contained in the further exhausts (H) and/or to recover heat from the exhausts (G) leaving the at least one gas turbine arrangement (900).

13. Energy supply system (300) according to at least one of claims 8 to 12, further comprising at least one heat exchange unit configured to collect heat from at least one solid oxide oxidation unit, the at least one fuel cell arrangement (200) and/or from compressed supply air provided to the at least one solid oxide oxidation unit (600) and/or the fuel cell arrangement (200).

14. Energy supply system (300) according to at least one of claims 8 to 13, further comprising at least one reformer unit (714) configured to reform at least one hydrocarbon fuel (C) to at least partly provide the reductant.

15. Apparatus, in particular a vehicle, such as an aircraft (400), comprising at least one solid oxide oxidation unit (600) according to at least one of claims 1 to 5, a fuel cell arrangement (200) according to claim 6 or 7, and/or an energy system (2) according to at least one of claims 8 to 14.
